(19) **Europäisches Patentamt**
**European Patent Office**
**Office européen des brevets**

(11) **EP 4 394 941 A1**

(12) **EUROPEAN PATENT APPLICATION**
published in accordance with Art. 153(4) EPC

(43) Date of publication:
**03.07.2024 Bulletin 2024/27**

(21) Application number: **21955092.8**

(22) Date of filing: **27.08.2021**

(51) International Patent Classification (IPC):
**H01M 4/505** (2010.01)    **H01M 4/525** (2010.01)

(52) Cooperative Patent Classification (CPC):
**H01M 4/525; H01M 4/131; H01M 4/36;**
**H01M 4/364; H01M 4/505; H01M 4/622;**
**H01M 10/0525;** H01M 2004/021; H01M 2004/028;
Y02E 60/10

(86) International application number:
**PCT/JP2021/031554**

(87) International publication number:
**WO 2023/026482 (02.03.2023 Gazette 2023/09)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **KABUSHIKI KAISHA TOSHIBA**
**Minato-ku**
**Tokyo 105-0023 (JP)**

(72) Inventors:
• **OTANI, Natsuki**
**Tokyo 105-0023 (JP)**
• **HASEGAWA, Takuya**
**Tokyo 105-0023 (JP)**

(74) Representative: **Hoffmann Eitle**
**Patent- und Rechtsanwälte PartmbB**
**Arabellastraße 30**
**81925 München (DE)**

(54) **ELECTRODE, BATTERY, AND BATTERY PACK**

(57)    According to one embodiment, provided is an electrode including an active material-containing layer. The active material-containing layer contains composite material particles that include active material particles containing a lithium nickel cobalt manganese composite oxide, an electro-conductive agent, and a binder. A strength ratio A/B of a breaking strength A of the composite material particles to a breaking strength B of the active material particles is within a range of 0.01 to 0.1. A density of the active material-containing layer is within a range of 3.2 g/cm$^3$ to 3.8 g/cm$^3$.

FIG. 1

**Description**

FIELD

Embodiments of the present invention relate to an electrode, battery, and battery pack.

BACKGROUND

In recent years, secondary batteries such as nonaqueous electrolyte batteries are anticipated for applications to large systems, for example, electric aircrafts and electric power storages, in addition to hybrid automobiles and electric automobiles. Accordingly, secondary batteries are demanded have improvement in performance such as large capacity, large current output, and long life performance in a high-temperature environment. A lithium nickel cobalt manganese oxide and the like are known as active materials excellent in large capacity performance for use in secondary batteries. However, the lithium nickel cobalt manganese oxide has an issue in that the lifetime is short because particle cracking, conversion into a deteriorated structure such as a rock-salt structure, or the like occurs with cycles of charge and discharge.

With regard to the problem described above, for example, it is known that the cycle performance of a secondary battery can be improved by using a positive electrode active material containing, as a main component, secondary particles which are formed by agglomeration of primary particles of a lithium composite oxide having a specific particle size and which have a specific compression breaking strength. In addition, there is a notion of obtaining a positive electrode in which cracking of particles due to pressing at the time of positive electrode molding or expansion and contraction at the time of charge and discharge does not occur, by using a powdery lithium composite oxide of monodisperse primary particles in which an inflection point of a volume reduction rate according to a Cooper plot method does not appear up to a specific numerical value.

CITATION LIST

PATENT LITERATURE

Patent Literature 1: Jpn. Pat. Appln. KOKAI Publication No. 2004-355824
Patent Literature 2: Jpn. Pat. Appln. KOKAI Publication No. 2016-157677

SUMMARY

TECHNICAL PROBLEM

Objects of embodiments are to provide an electrode capable of realizing a long-life battery excellent in output performance, and to provide a long-life battery and battery pack excellent in output performance.

SOLUTION TO PROBLEM

According to one embodiment, provided is an electrode including an active material-containing layer. The active material-containing layer contains composite material particles that include active material particles containing a lithium nickel cobalt manganese composite oxide, an electro-conductive agent, and a binder. A strength ratio A/B of a breaking strength A of the composite material particles to a breaking strength B of the active material particles is within a range of 0.01 to 0.1. A density of the active material-containing layer is within a range of 3.2 g/cm$^3$ to 3.8 g/cm$^3$.

According to another embodiment, provided is a battery including a positive electrode and a negative electrode. The positive electrode includes the electrode according to the above embodiment.

According to a further other embodiment, provided is a battery pack including the battery according to the above embodiment.

BRIEF DESCRIPTION OF THE DRAWINGS

FIG. 1 is a plan view schematically showing an example of an electrode according to an embodiment.
FIG. 2 is a partially cutaway perspective view of an example of a battery according to the embodiment.

FIG. 3 is an enlarged sectional view of a section E of the battery shown in FIG. 2.
FIG. 4 is a partially cutaway perspective view of another example of the battery according to the embodiment.
FIG. 5 is a partially cutaway perspective view of yet another example of the battery according to the embodiment.
FIG. 6 is an enlarged sectional view of a section F of the battery shown in FIG. 5.
FIG. 7 is an exploded perspective view of an example of a battery pack according to an embodiment.
FIG. 8 is a block diagram showing an electric circuit of the battery pack shown in FIG. 7.

DETAILED DESCRIPTION

The conventional battery cell or the like using a lithium nickel cobalt manganese oxide in a positive electrode has an issue in that, upon repeating a charge/discharge cycle, cracking occur in lithium nickel cobalt manganese oxide particles of the positive electrode, whereby lifetime is not satisfactory. In addition, in the conventional lithium nickel cobalt manganese oxide, a polycrystalline material that form secondary particles, in which primary particles having a fine particle shape are agglomerated, is generally used. When such a positive electrode having a high specific surface area is used, an oxidation reaction is likely to occur between the positive electrode and the electrolyte solution in cycles or calendaring (storage or preservation) using a high potential in particular, and significant gas generation or resistance increase may be observed.

Hereinafter, embodiments will be described with reference to the drawings. The same reference signs are applied to common components throughout the embodiments and overlapping explanations are omitted. Each drawing is a schematic view for explaining the embodiment and promoting understanding thereof; though there may be differences in shape, size and ratio from those in an actual device, such specifics can be appropriately changed in design taking the following explanations and known technology into consideration.

[First Embodiment]

According to a first embodiment, provided is an electrode including an active material-containing layer that includes composite material particles. The composite material particles include active material particles, an electro-conductive agent, and a binder. The active material particles contain a lithium nickel cobalt manganese composite oxide. The strength ratio A/B of a breaking strength A of the composite material particles to a breaking strength B of the active material particles is within a range of 0.01 to 0.1. The density of the active material-containing layer is within a range of 3.2 g/cm$^3$ to 3.8 g/cm$^3$.

According to the configuration described above, an appropriate condition is satisfied for the balance in strength (the aforementioned strength ratio A/B) between the particles of the electrode active material and the composite material particles configuring the active material-containing layer (so-called electrode composite material layer) of the electrode, and the density (electrode density) of the active material-containing layer is set in an appropriate range, whereby favorable cycle life performance is obtained. In addition, the output performance changes depending on the degree of the breaking strength A of the composite material particles.

Namely, for the electrode, the strength ratio A/B of the breaking strength A of the composite material particles to the breaking strength B of the active material particles is set within the range of 0.01 to 0.1, and the electrode density is set within the range of 3.2 g/cm$^3$ to 3.8 g/cm$^3$, thereby achieving excellent output performance and life performance for secondary batteries. Specifically, by reducing the breaking strength of the electrode, the bonding force between the active material particles and the bonding force of the active material particles with respect to the electro-conductive agent and the binder are reduced, and the volume change of the active material due to charge and discharge can be easily alleviated. Thereby, a gap is easily generated between the active materials, and for example, permeation of the liquid electrolyte becomes favorable, and favorable output performance can be achieved.

Normally, as the electrode density is increased, the breaking strength of the positive electrode is increased and the output performance is reduced. In the electrode according to the embodiment, the ratio of sub-members (the electro-conductive agent, the binder, and the like) in the electrode, the preparation conditions of slurry for electrode production, the pressing conditions in electrode production, and the like are devised to obtain an electrode in which the breaking strength of the electrode composite material is small even with a relatively high electrode density. In addition, since the breaking strength of the lithium nickel cobalt manganese composite oxide (NCM) active material is high, particle cracking is less likely to occur during pressing or charging and discharging, and thus, improvement in life performance is achieved.

Since the strength ratio A/B of the breaking strength A of the composite material particles and the breaking strength B of the active material particles is 0.01 or more, the breaking strength A of the composite material particles is relatively high; therefore, stable electrode production and battery assembly can be performed. In addition, since the compression breaking strength A of the composite material particles is high, the binding within the active material-containing layer can withstand the volume change of the electrode associated with charge and discharge. Therefore, the electron conductivity of the electrode can be maintained. Furthermore, since the breaking strength (B) of the NCM active material is not too high, in-solid diffusion within the active material particles is satisfactory.

The strength ratio A/B being 0.1 or less indicates that the breaking strength A of the composite material particles is appropriately suppressed. That is, the binding among the active material, electro-conductive agent, and binder is not excessive and the agglomeration thereof is moderate. Therefore, for example, the liquid electrolyte easily permeates, improving the output performance. Furthermore, since the breaking strength (B) of the NCM active material is high and particle cracking associated with charge and discharge is suppressed, the life performance is high.

By having the density of the active material-containing layer, i.e., the electrode density be 3.2 g/cm$^3$ or more, the electronic conductivity of the electrode can be made high, and the electric resistance in a battery using the electrode ben be made little. In addition, with the electrode density being 3.8 g/cm$^3$ or less, for example, a liquid electrolyte easily penetrates into the electrode, and thus the input and output performances are satisfactory. As the density of the electrode increases, the permeation of the liquid electrolyte may become worse; in this case, the electrode reaction occurs non-uniformly, and the deterioration of the active material or the like progresses locally as charge and discharge are repeated. Therefore, if the electrode density is too high, the charge-discharge cycle performance is lowered. Furthermore, if the electrode density is too high, local heat generation may occur when the battery is overcharged or exposed to an abnormally high temperature, resulting in a decrease in the safety of the battery.

In the electrode according to the first embodiment, the breaking strength A of the composite material particles is appropriately lower than the breaking strength B of the NCM active material particles, and the breaking strength B of the NCM active material particles is appropriately high. In addition, by having the electrode density be appropriately high, the permeation of the electrolyte is not inhibited while the electron conductivity of the electrode is secured. By designing the electrode in this manner, when the electrode is incorporated into a battery, the electrolyte permeates uniformly into the electrode, and particle cracking of the active material due to charge and discharge can be suppressed. By virtue of the above, using the electrode according to the first embodiment can improve the output performance and the life performance of the battery.

Such an electrode may be, for example, an electrode for a battery. More specifically, the electrode may be a positive electrode for use in a battery. That is, the electrode may be a positive electrode for a battery.

The electrode may further include a current collector. The active material-containing layer may be formed on at least one surface of the current collector. In a case where the current collector has, for example, a sheet shape, the active material-containing layer can be supported on at least one principal surface on the front and back of the current collector.

The current collector may include a portion in which the active material-containing layer is not supported on a surface thereof. This portion may serve, for example, as an electrode current collecting tab. Alternatively, the electrode may further include an electrode current collecting tab independent from the electrode current collector. The independent electrode current collecting tab may be electrically connected to the electrode.

The active material-containing layer may be, for example, a positive electrode active material-containing layer containing the lithium nickel cobalt manganese composite oxide as a positive electrode active material. The active material-containing layer contains at least an electro-conductive agent and a binder as sub members other than the active material. The active material, the electro-conductive agent, and the binder are contained in the active material-containing layer in the form of composite material particles.

The lithium nickel cobalt manganese composite oxide is contained in the composite material particles within the active material-containing layer in the form of particles. As the active material particles, monocrystalline particles of a lithium nickel cobalt manganese composite oxide may be used, secondary particles in which such primary particles are agglomerated may be used, or a mixture of primary particles and secondary particles may be used. More preferable examples of the form of the active material particles include a form of monocrystalline particles.

An average particle size of the active material particles can be within a range of 2 um to 6 um. With the average particle size being 2 $\mu$m or more, the specific surface area of the electrode can be reduced. As a result, the influence of side reactions between the electrode and the electrolyte on the life performance can be reduced. On the other hand, an average particle size being 6 $\mu$m or less can moderate the concentration gradient of lithium ions that may occur within the particles, and can thus reduce the influence of the concentration gradient on life performance. Therefore, by setting the average particle size to 2 $\mu$m to 6 um, the life performance of the battery can be further improved. A more preferable range of the average particle size is 3.5 um to 4.5 $\mu$m.

In the particle size distribution of the active material-containing layer of the electrode by a laser diffraction scattering method, the ratio $D_{90}/D_{10}$ of the particle size $D_{90}$ at which the cumulative frequency from the small particle size side is 90% to the particle size $D_{10}$ at which the cumulative frequency from the small particle size side is 10% is preferably 4 or less. The ratio $D_{90}/D_{10}$ is an index that indicates the spread of the particle size distribution. Reaction distribution within the electrode hardly occurs when the particle size is more consistent, as such, whereby charge/discharge reactions progress uniformly, and thus, the life performance improves.

The lithium nickel cobalt manganese composite oxide is represented by, for example, a general formula

$Li_aNi_{1-x-y-z}CO_xMn_yM_zO_2$. The ranges of the subscripts in the above general formula are $0.9 < a \leq 1.25$, $0 < x < 1$, $0 < y < 1$, $0 < z < 0.2$, and $x + y + z < 1$. M in the general formula includes one or more metal elements other than Ni, Co, and Mn. The metal element (M) may include, for example, one or more selected from the group consisting of Mg, Ca, Al, Ti, V, Cr, Zr, Nb, Mo, and W. The proportional content of nickel among the metal elements in the lithium nickel cobalt manganese composite oxide is preferably 60 mol% or more. That is, the sum of the subscripts x, y, and z is preferably 0.4 or less ($x + y + z \leq 0.4$). In addition, the proportional content of nickel among the metal elements is preferably 85% or less, that is, the sum of x, y, and z is preferably 0.15 or more ($x + y + z \geq 0.15$). Specific examples of preferred compositions include $LiNi_{0.8}Co_{0.1}Mn_{0.1}O_2$.

The active material particles may contain a further active material other than the lithium nickel cobalt manganese composite oxide. Here, the lithium nickel cobalt manganese composite oxide described above may be referred to as a "first active material", and other additional active material (s) may be referred to as "second active material" for convenience. In the case where the second active material is further included in addition to the first active material, the mass proportion of the second active material to the total mass of the first active material and the second active material is preferably within the range of 5 mass% or more and 40 mass% or less, and more preferably within the range of 10 mass% or more and 30 mass% or less.

As the second active material, for example, lithium-containing cobalt oxides (for example, $LiCoO_2$), manganese dioxide, lithium-manganese composite oxides (for example, $LiMn_2O_4$ and $LiMnO_2$), lithium-containing nickel oxides (for example, $LiNiO_2$), lithium-containing nickel-cobalt oxides (for example, $LiNi_{0.8}Co_{0.2}O_2$), lithium-containing iron oxides, vanadium oxides including lithium, chalcogen compounds such as titanium disulfide and molybdenum disulfide, and the like may be included. The species of the second active material may be one species or two species or more.

The breaking strength B of the active material particles is desirably within the range of 30 MPa to 300 MPa. More preferably, the breaking strength B of the active material particles is 120 MPa or more. The breaking strength of the active material particles can be adjusted by controlling the temperature conditions at the time of synthesizing the active material or by doping elements. To be specific, an active material having excellent crystallinity and high breaking strength can be obtained by setting the firing temperature to 900°C or lower, using LiOH, $LiNO_3$ or the like having higher reactivity for the addition of an Li source, using a composition in which the amount of the added Li source is excessive, performing firing in an oxygen atmosphere, or performing firing a plurality of times, in order to prevent distortion of the crystalline structure such as cation mixing or the like.

One example, in which an increase in the breaking strength A of the composite material particles is suppressed even with the electrode density increased, is an electrode having excellent dispersibility of the electro-conductive agent and binder. Examples of methods for obtaining an electrode having excellent dispersibility of the electro-conductive agent and binder include, optimization of kneading conditions at the time of slurry production and dispersion conditions by a bead mill. As a specific example, the following contrivance is applicable. A composite material (compound) of an active material and an electro-conductive agent, and a binder solution, in which a binder is dissolved or dispersed in a solvent, are prepared. When the compound is put into the binder solution, putting-in of the powder is divided into a plurality of times so that the viscosity does not rapidly increase.

The breaking strength A of the composite material particles is desirably within the range of 2 MPa to 10 MPa. The breaking strength A of the composite material particles is more preferably within the range of 2.5 MPa to 10 MPa. The strength ratio A/B obtained by dividing the breaking strength A of the composite material particles by the breaking strength B of the active material particles is made 0.01 to 0.1. The strength ratio A/B is more preferably within the range of 0.01 to 0.04.

The electro-conductive agent may improve current collection performance and suppress the contact resistance between the active material and the current collector. The electro-conductive agent preferably includes a carbon material. Examples of carbon material include acetylene black, ketjen black, furnace black, graphite, carbon nanotubes, carbon nanofibers, and the like. The active material-containing layer may include one species or two species or more of the above carbon materials.

The electro-conductive agent is, for example, in the form of particles or fibers. The average particle size of the electro-conductive agent particles is preferably 20 nm to 100 nm. The proportional content of the electro-conductive agent with respect to the total mass of the active material particles, the electro-conductive agent, and the binder is preferably within a range of 3% by mass to 20% by mass.

Examples of the binder include polytetrafluoroethylene (PTFE), polyvinylidene fluoride (PVdF), and fluororubber. One species or two species or more of binders may be used. The proportional content of the binder with respect to the total mass of the active material particles, the electro-conductive agent, and the binder is preferably within a range of 1% by mass to 1.8% by mass.

As the current collector, for example, a metal foil or an alloy foil may be used. Examples of the metal foil include an aluminum foil, a stainless steel foil, and a nickel foil. Examples of the alloy foil include an aluminum alloy foil, a copper alloy foil, and a nickel alloy foil.

The electrode described above is produced, for example, by the following method. The active material, the electro-conductive agent, and the binder are kneaded together with a solvent (for example, N-methylpyrrolidone (NMP)) to prepare a slurry. At the time of slurry preparation, the aforementioned optimization of kneading conditions and dispersion conditions are carried out. The obtained slurry is applied onto a current collector, dried, and pressed to obtain an electrode. As necessary, a process of cutting into a predetermined width may be carried out before or after pressing.

<Various Measurement Methods>

Methods for measuring the composition of the active material, breaking strengths, and particle size distribution are described below. First, a method of taking out an electrode from a battery will be described.

First, a battery to be measured is prepared. For the battery as a measurement target, one that has a discharge capacity of 80% or more of the rated capacity is used. That is, a battery with excessive deterioration is not to be subjected to measurement.

Next, the prepared battery is discharged until the open circuit voltage reaches 2.0 V to 2.2 V. The discharged battery is then transferred into an argon-filled glove box in which the dew point of an internal atmosphere is -70°C. Inside such a glove box, the battery is opened.

The electrode may be included in the battery in a form of configuring an electrode group together with a counter electrode and a separator, as in a later-described embodiment. The counter electrode is, for example, a negative electrode in a case where the electrode is a positive electrode.

The electrode group is taken out from the cut-open battery. If the taken-out electrode group includes a positive electrode lead and a negative electrode lead, the positive electrode lead and the negative electrode lead are cut while taking care not to allow the positive and negative electrodes to short-circuit with one another.

Next, the electrode group is disassembled into the positive electrode, the negative electrode, and the separator. The electrode (for example, the positive electrode) thus obtained is washed with methyl ethyl carbonate as a solvent. During this washing, the member obtained by the disassembling is completely immersed in the methyl ethyl carbonate solvent and left in this state for 10 minutes.

After the washing, the electrode is subjected to vacuum drying. At the time of vacuum drying, the pressure is reduced from atmospheric pressure to -97 kpa or further in a 25°C environment, and this state is maintained for 60 minutes. The electrode taken out by such a procedure is measured by the following method.

[Composition of Active Material]

The compositions of the active materials can be determined by measuring the surface of each of the positive electrode and the negative electrode taken out by the aforementioned procedure by X-ray fluorescence (XRF).

[Breaking Strength]

The breaking strength A of the composite material particles is measured by the following method. The electrode (for example, the positive electrode) obtained by disassembling the battery is washed in a methyl ethyl carbonate solvent and dried, and thereafter an electrode component, that is, an active material-containing layer is scraped off from the current collector using a spatula or the like. From the scraped electrode pieces, those having a size of 10 $\mu$m to 30 $\mu$m are selected, to thereby obtain composite material particle samples. A micro compression tester MCT-510 manufactured by Shimadzu Corporation is used as a measuring device, and a very small amount of the composite material particle samples is scattered on a pressure plate of the device, and the composite material particles are compressed one by one.

The breaking strength B of the active material particles (for example, NCM particles) is measured by the following method. By immersing and stirring the electrode (for example, the positive electrode) obtained by disassembling the battery in an N-methyl-2-pyrrolidone solution, the electrode component is falls off from the current collector foil.

From the fallen off electrode component, pieces having a size of 2 $\mu$m to 6 $\mu$m are selected, to thereby obtain active material particle samples. The micro compression tester MCT-510 manufactured by Shimadzu Corporation is used as a measuring device, and a very small amount of the active material particle samples is scattered on a pressure plate of the device, and the particles are compressed one by one. Whether or not the electrode component having a size of 2 $\mu$m to 6 um contains NCM can be examined by subjecting this sample to the aforementioned elemental analysis by XRF.

The breaking strength is calculated by the following equation for both the composite material particles (breaking strength A) and the active material particles (breaking strength B).

$$Cs = 2.8 \ P/\pi d^2$$

Here, Cs represents a breaking strength (numerical unit: N/mm$^2$, or MPa), P represents a test force (numerical unit: N), and d represents a particle size (numerical unit: mm).

[Particle Size Distribution]

The particle size distribution of the active material particles and the electro-conductive agent particles contained in the electrode can be obtained by a laser diffraction scattering method. From the particle size distribution, not only the aforementioned ratio $D_{90}/D_{10}$ but also the average particle size of the active material particles can be obtained.

The active material-containing layer is taken off from the electrode (for example, the positive electrode) taken out by disassembling the battery using, for example, a spatula. The taken-off powdery active material-containing layer sample is put into a measurement cell filled with N-methylpyrrolidone until the concentration becomes measurable. The capacity of the measurement cell and the measurable concentration vary depending on the particle size distribution measuring device. The measurement cell containing N-methylpyrrolidone and the active material-containing layer sample is irradiated with ultrasonic waves at an output power of 40 W for 5 minutes. Such ultrasonic irradiation can resolve the agglomeration of the electro-conductive agent particles and the active material particles.

The measurement cell that has been subjected to the ultrasonic treatment is inserted into a particle size distribution measuring device using a laser diffraction scattering method to measure a particle size distribution. An example of the particle size distribution measuring device is Microtrac 3100.

In this way, the particle size distribution of the active material-containing layer can be obtained.

In the obtained particle size distribution, the particle size at which the cumulative frequency from the small particle size side is 10% and the particle size at which the cumulative frequency is 90% are defined as $D_{10}$ and $D_{90}$, respectively, and the ratio $D_{90}/D_{10}$ is calculated. The particle size $D_{50}$ at which the cumulative frequency from the small particle size side is 50% is determined as the average particle size of the active material particles.

Next, specific examples of the electrode according to the first embodiment will be described with reference to the drawings.

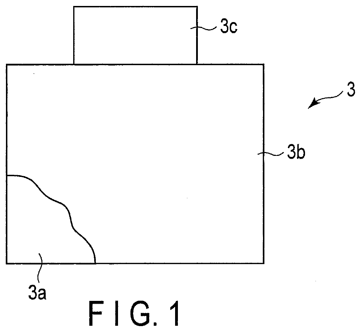

FIG. 1 is a partially cutaway plan view schematically showing an example of the electrode according to the embodiment. Herein, an example of the positive electrode is illustrated as an example of the electrode.

A positive electrode 3 shown in FIG. 1 includes a positive electrode current collector 3a and a positive electrode active material-containing layer 3b provided on a surface of the positive electrode current collector 3a. The positive electrode active material-containing layer 3b is supported on a principal surface of the positive electrode current collector 3a.

The positive electrode current collector 3a includes a section in which the positive electrode active material-containing layer 3b is not provided on a surface thereof. This section serves, for example, as a positive electrode current collecting tab 3c. In the illustrated example, the positive electrode current collecting tab 3c is a narrow portion having a narrower width than that of the positive electrode active material-containing layer 3b. The width of the positive electrode current collecting tab 3c may be narrower than the width of the positive electrode active material-containing layer 3b in this manner, or may alternatively be the same as the width of the positive electrode active material-containing layer 3b. Instead of the positive electrode current collecting tab 3c, which is part of the positive electrode current collector 3a, a separate electrically conductive member may be electrically connected to the positive electrode 3 and used as an electrode current collecting tab (positive electrode current collecting tab).

The electrode according to the first embodiment is provided with an active material-containing layer that includes composite material particles. The composite material particles include active material particles, electro-conductive agent, and binder. The active material particles contain a lithium nickel cobalt manganese composite oxide. The strength ratio A/B of a breaking strength A of the composite material particles with respect to a breaking strength B of the active material particles is within a range of 0.01 to 0.1. The density of the active material-containing layer is within a range of 3.2 g/cm$^3$ to 3.8 g/cm$^3$. The electrode can realize a long-life battery with superior output performance.

[Second Embodiment]

According to a second embodiment, provided is an electrode group including a positive electrode and a negative electrode. The positive electrode includes the electrode according to the first embodiment. The electrode group may be, for example, an electrode group for a secondary battery. The battery may be, for example, a lithium ion secondary battery.

The electrode group may further include a separator disposed between the positive electrode and the negative electrode.

The structure of the electrode group is not particularly limited. For example, the electrode group may have a stacked structure. The stacked structure has a structure in which the above-described positive electrode and the negative electrode described are stacked with the separator sandwiched therebetween. Alternatively, the electrode group may have a wound structure. The wound structure is a structure in which the above-described positive electrode and the negative electrode are stacked with the separator sandwiched therebetween, and the thus obtained stack is spirally wound.

Hereinafter, the positive electrode, the negative electrode, and the separator will be described.

(1) Positive Electrode

As the positive electrode, the electrode according to the first embodiment described above can be used. Since the details are the same as those already described, the descriptions thereof are omitted.

(2) Negative Electrode

The negative electrode may include a negative electrode current collector and a negative electrode active material-containing layer formed on the negative electrode current collector. The negative electrode active material-containing layer may contain an electro-conductive agent and a binder in addition to the negative electrode active material.

Hereinafter, the negative electrode active material, the electro-conductive agent, the binder, and the negative electrode current collector will be described.

The negative electrode active material preferably contains an active material that reacts at a potential higher than the Li-reaction potential by 0.5 V (vs. Li/Li$^+$) or more. A battery including such a negative electrode can suppress precipitation of lithium due to charge and discharge. Therefore, such a battery is superior in input/output performance. The Li-reaction potential is a potential at which lithium ions are absorbed and released, and is represented as -3.045 V (vs. SHE) with reference to the potential of the standard hydrogen electrode. Used as the negative electrode active material are, for example, spinel lithium titanate represented by $Li_{4+w}Ti_5O_{12}$ (w varies within a range of $-1 \leq w \leq 3$ due to charge and discharge reactions) (the reaction potential with respect to the Li-reaction potential is 1.55 V (vs. Li/Li$^+$)), ramsdellite lithium titanate represented by $Li_{2+w}Ti_3O_7$ (w varies within a range of $-1 \leq w \leq 3$ due to charge and discharge reactions) (the reaction potential with respect to the Li reaction potential is 1.75 V (vs. Li/Li$^+$)), a niobium titanium composite oxide represented by $Nb_2TiO_7$ (the reaction potential with respect to the Li-reaction potential is 1.0 V to 1.7 V (vs. Li/Li$^+$)), a metallic composite oxide containing Ti and at least one element selected from the group consisting of P, V, Sn, Cu, Ni, and Fe, or the like. Examples of the metallic composite oxides containing Ti and at least one element selected from the group consisting of P, V, Sn, Cu, Ni, and Fe include $TiO_2$-$P_2O_5$, $TiO_2$-$V_2O_5$, $TiO_2$-$P_2O_5$-$SnO_2$, or $TiO_2$-$P_2O_5$-MO (M is at least one element selected from the group consisting of Cu, Ni, and Fe). These metal composite oxides change into lithium-titanium composite oxides when lithium is inserted by charging. Among the lithium-titanium composite oxides, spinel lithium titanate is preferable because of its excellent cycle life performance.

The negative electrode active material may be in the form of particles, for example. The form of the particles may be primary particles or secondary particles in which primary particles are agglomerated. The negative electrode active material may contain both singular primary particles and secondary particles. An average primary particle size of the negative electrode active material may be, for example, within a range of 0.15 um or more and 1 $\mu$m or less. With an average primary particle size of 0.15 $\mu$m or more, the influence of gas generation on the life performance can be reduced. On the other hand, with an average primary particle size of 1 $\mu$m or less, a self-discharge amount of the negative electrode would be appropriate, whereby the improvement of the life performance due to over-discharge suppression becomes remarkable. Therefore, by setting the average primary particle size of the negative electrode active material particles to 0.15 um or more and 1 um or less, the life performance of the battery can be further improved. A more preferable range of the average primary particle size of the negative electrode active material particles is 0.3 um or more and 0.8 $\mu$m or less.

The density of the negative electrode active material-containing layer may be 2.0 g/cm$^3$ or more and 2.4 g/cm$^3$ or less.

Examples of the electro-conductive agent include carbonaceous materials such as acetylene black, carbon black, and graphite.

Examples of the binder include polytetrafluoroethylene (PTFE), polyvinylidene fluoride (PVdF), fluororubber, and styrene-butadiene rubber.

In a case where the negative electrode active material is a substance that can absorb and release lithium ions, a material that is electrochemically stable at the lithium ion absorption and release potential of the negative electrode active material can be used as the negative electrode current collector. The negative electrode current collector is preferably a metal foil made of at least one selected from copper, nickel, stainless steel, and aluminum, or an alloy foil made of an aluminum alloy containing at least one element selected from Mg, Ti, Zn, Mn, Fe, Cu, and Si. As the shape of the negative electrode current collector, various shapes can be used depending on the use of the battery.

The negative electrode current collector may include a portion in which the active material-containing layer is not supported on a surface thereof. This portion may serve, for example, as a negative electrode current-collecting tab. Alternatively, the negative electrode may further include a negative electrode current-collecting tab independent from the negative electrode current collector. The independent negative electrode current-collecting tab may be electrically connected to the negative electrode.

The negative electrode can be produced, for example, by the following method. First, a negative electrode active material, a binder, and if necessary, an electro-conductive agent are suspended in a commonly used solvent such as N-methylpyrrolidone (NMP) to prepare a slurry for producing a negative electrode. The obtained slurry is applied onto the negative electrode current collector. The applied slurry is dried and the dried coating film is pressed, whereby there can be obtained a negative electrode including a negative electrode current collector and a negative electrode active material-containing layer formed on the negative electrode current collector. If necessary, a process of cutting into a predetermined width may be carried out before or after pressing.

(3) Separator

The separator is not particularly limited as long as it has insulating properties, and a porous film or a nonwoven fabric made of a polymer such as polyolefin, cellulose, polyethylene terephthalate, or vinylon can be used. The material of the separator may be one species or a combination of two species or more.

The thickness of the separator may be 5 $\mu$m to 20 $\mu$m.

The electrode group according to the second embodiment includes a positive electrode and a negative electrode. The positive electrode includes the electrode according to the first embodiment. Therefore, a battery using the electrode group exhibits superior output performance and long life.

[Third embodiment]

According to a third embodiment, provided is a battery including a positive electrode and a negative electrode. The positive electrode includes the electrode according to the first embodiment. The battery may be, for example, a secondary battery. To be specific, the battery may be, for example, a lithium ion secondary battery.

The battery may further include a separator disposed between the positive electrode and the negative electrode. The positive electrode, the negative electrode, and the separator may configure, for example, an electrode group. That is, the battery according to the third embodiment may include the electrode group according to the second embodiment.

The structure of the electrode group is not particularly limited. The electrode group may have, for example, the stacked structure or the wound structure described in the second embodiment.

The battery may further include an electrolyte. As the electrolyte, for example, a nonaqueous electrolyte may be included. Namely, the battery according to the embodiment may be a nonaqueous electrolyte battery. The electrolyte may be held in the electrode group. For example, the electrode group may be impregnated with the electrolyte.

The battery may further include a container member that houses the electrode group and the electrolyte. Moreover, the battery according to the embodiment may further include a positive electrode terminal electrically connected to the positive electrode and a negative electrode terminal electrically connected to the negative electrode. At least a part of the positive electrode terminal and at least a part of the negative electrode terminal may be drawn outside the container member. In addition, the battery may further include electrode leads. The electrode lead may be, for example, a positive electrode lead that electrically connects the positive electrode and the positive electrode terminal. Alternatively, the electrode lead may be, for example, a negative electrode lead that electrically connects the negative electrode and the negative electrode terminal.

Hereinafter, the electrolyte, the container member, the positive electrode terminal, and the negative electrode terminal will be described. Note that the details of the positive electrode, the negative electrode, and the separator are the same as those described in the second embodiment, and thus, the description thereof are omitted.

(I) Electrolyte

As the electrolyte, for example, a nonaqueous electrolyte containing a nonaqueous solvent and an electrolyte salt dissolved in the nonaqueous solvent can be used. Examples of the nonaqueous electrolyte include a liquid nonaqueous electrolyte and a gel nonaqueous electrolyte.

Examples of the electrolyte salts include lithium salts such as $LiPF_6$, $LiBF_4$, $Li(CF_3SO_2)_2N$ (lithium bis(trifluoromethanesulfonyl)amide; commonly known as LiTFSI), $LiCF_3SO_3$ (commonly known as LiTFS), $Li(C_2F_5SO_2)_2N$ (lithium bis (pentafluoroethanesulfonyl)amide; commonly known as LiBETI), $LiClO_4$, $LiAsF_6$, $LiSbF_6$, $LiB(C_2O_4)_2$ (lithium bis(oxalato)borate; commonly known as LiBOB), $LiBF_2OCOOC(CF_3)_2$ (lithium difluoro (trifluoro-2-oxido-2-trifluoro-methylpropionato(2-)-0,0) borate; commonly known as $LiBF_2$(HHIB)). These electrolyte salts may be used alone or in combination of two species or more thereof. $LiPF_6$, $LiBF_4$ or a mixture thereof is preferably used as the electrolyte salt.

The electrolyte salt concentration in the nonaqueous electrolyte is preferably within the range of 1 mol/L to 3 mol/L. If the concentration of the electrolyte salt is within this range, it is possible to further improve the performance in a case where a high load current flows while suppressing the influence of an increase in viscosity due to an increase in the concentration of the electrolyte salt in the nonaqueous electrolyte.

The nonaqueous solvent is not particularly limited. As the nonaqueous solvent, for example, a cyclic carbonate such as propylene carbonate (PC) and ethylene carbonate (EC); a linear carbonate such as diethyl carbonate (DEC), dimethyl carbonate (DMC), methyl ethyl carbonate (MEC), and dipropyl carbonate (DPC); difluorophosphate; 1,2-dimethoxyethane (DME); γ-butyrolactone (GBL); tetrahydrofuran (THF); 2-methyltetrahydrofuran (2-MeTHF); 1,3-dioxolane; sulfolane; or acetonitrile (AN) is used. These solvents may be used alone or in combination of two species or more thereof.

The nonaqueous solvent preferably contains diethyl carbonate and a difluorophosphate. In charge-discharge cycles and calendaring (storage or preservation) using a high potential, in particular, an oxidation reaction between the positive electrode and the nonaqueous electrolyte readily occurs, and gas generation and resistance increase are remarkable. Diethyl carbonate can suppress gas generation due to an oxidation reaction of the nonaqueous electrolyte on the positive electrode. On the other hand, difluorophosphate can suppress the decomposition reaction of the Li salt in the nonaqueous electrolyte. In the battery including the nonaqueous electrolyte containing diethyl carbonate and difluorophosphate, the oxidation reaction between the positive electrode and the nonaqueous electrolyte and the decomposition reaction of the supporting salt can be suppressed, and thus the life performance can be further improved. Examples of difluorophosphate include lithium difluorophosphate ($LiPO_2F_2$), sodium difluorophosphate, and potassium difluorophosphate.

(II) Container Member

As the container member, for example, a laminate film or a metal container is used. The sheet thickness of the laminate film and the plate thickness of the metal container may each be 0.5 mm or less. As the container member, a resin container made of a polyolefin resin, a polyvinyl chloride resin, a polystyrene resin, an acrylic resin, a phenol resin, a polyphenylene resin, a fluorine resin, or the like may be used.

Examples of the shape of the container member, that is, the shape of the battery include a flat type (thin type), a prismatic type, a cylindrical type, a coin type, and a button type. For example, the battery can be applied to both a small-sized battery installed in a portable electronic device or the like, and a large-sized battery installed in a two-wheeled to four-wheeled vehicle or the like.

Examples of the laminate film include a multilayer film including resin layers and a metal layer interposed between the resin layers. The metal layer is preferably an aluminum foil or an aluminum alloy foil for weight reduction. For example, a polymer material such as polypropylene (PP), polyethylene (PE), nylon, or polyethylene terephthalate (PET) may be used for the resin layer. The laminate film can be molded into the shape of the container member by sealing with thermal fusion bonding.

The metal container is made of aluminum, an aluminum alloy, or the like. As the aluminum alloy, an alloy containing an element such as magnesium, zinc, or silicon is preferable. In a case where the alloy contains transition metals such as iron, copper, nickel, and chromium, the amount thereof is preferably 100 ppm by mass or less.

(III) Positive Electrode Terminal

Apart of the positive electrode terminal is electrically connected to a part of the positive electrode, whereby the positive electrode terminal can serve as a conductor for electrons to move between the positive electrode and an external circuit. The positive electrode terminal can be connected to, for example, the positive electrode current collector, in particular, the positive electrode current-collecting tab. Alternatively, the positive electrode terminal may be connected to, for example, the positive electrode current-collecting tab via a positive electrode lead.

The positive electrode terminal is preferably formed of, for example, a material that is electrically stable at a potential 3.0 V to 4.5 V (vs. Li/Li+) higher than the Li-reaction potential, and having electrical conductivity. The positive electrode terminal is preferably formed from aluminum or an aluminum alloy containing one or more selected from the group consisting of Mg, Ti, Zn, Mn, Fe, Cu, and Si.

The positive electrode terminal is preferably formed of a material with high electrical conductivity. In such a case the positive electrode terminal is connected to the positive electrode current collector, the positive electrode terminal is preferably made of the same material as the current collector. By using the same material, contact resistance between the positive electrode terminal and the positive electrode current collector can be reduced. The positive electrode lead is preferably formed of the same material as the positive electrode terminal and the positive electrode current collector, similarly.

(IV) Negative Electrode Terminal

Apart of the negative electrode terminal is electrically connected to a part of the negative electrode, whereby the negative electrode terminal can serve as a conductor for electrons to move between the negative electrode and an external circuit. The negative electrode terminal can be connected to, for example, the negative electrode current collector, in particular, the negative electrode current-collecting tab. Alternatively, the negative electrode terminal may be connected to, for example, the negative electrode current-collecting tab via a negative electrode lead.

The negative electrode terminal is preferably formed of a material that is electrically stable at a potential 0.5 V to 3.0 V (vs. Li/Li$^+$) higher than the Li-reaction potential, and having electrical conductivity. The negative electrode terminal is preferably formed from aluminum or an aluminum alloy containing one or more selected from the group consisting of Mg, Ti, Zn, Mn, Fe, Cu, and Si.

The negative electrode terminal is preferably formed of a material with high electrical conductivity. In such a case the negative electrode terminal is connected to the negative electrode current collector, the negative electrode terminal is preferably made of the same material as the current collector. By using the same material, contact resistance between the negative electrode terminal and the negative electrode current collector can be reduced. The negative electrode lead is preferably formed of the same material as the negative electrode terminal and the negative electrode current collector, similarly.

Next, an example of the battery according to the embodiment will be described in more detail with reference to the drawings.

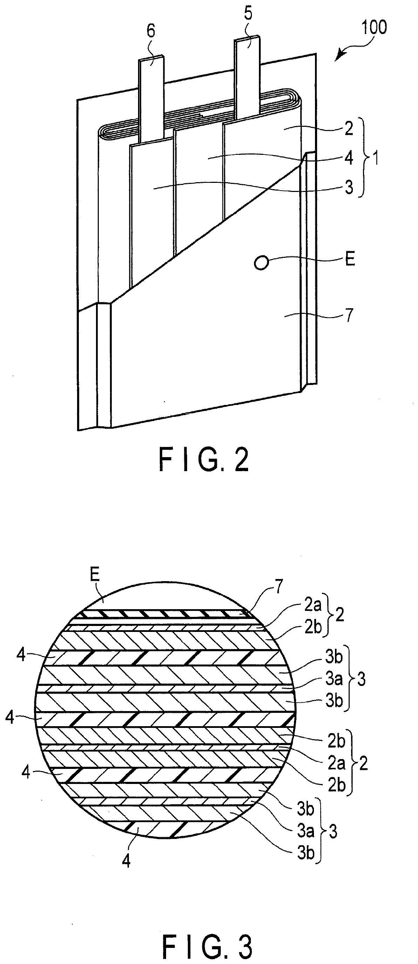

FIG. 2 is a partially cutaway perspective view of an example of a battery according to the embodiment. FIG. 3 is an enlarged sectional view of section E of the battery shown in FIG. 2.

The battery 100 shown in FIG. 2 and FIG. 3 includes a flat electrode group 1. The flat electrode group 1 includes a negative electrode 2, a positive electrode 3, and a separator 4. The electrode group has a structure where the negative electrode 2 and the positive electrode 3 with the separator 4 interposed therebetween are wound spirally into a flat shape.

As shown in FIG. 3, the negative electrode 2 includes a negative electrode current collector 2a and a negative electrode active material-containing layer 2b supported on the negative electrode current collector 2a. As shown in FIG. 3, the positive electrode 3 includes a positive electrode current collector 3a and a positive electrode active material-containing layer 3b supported on the positive electrode current collector 3a.

As shown in FIG. 2, in the battery 100, a belt-shaped negative electrode terminal 5 is electrically connected to the negative electrode 2. More specifically, the negative electrode terminal 5 is connected to the negative electrode current collector 2a. A belt-shaped positive electrode terminal 6 is electrically connected to the positive electrode 3. More specifically, the positive electrode terminal 6 is connected to the positive electrode current collector 3a.

The battery 100 further includes an exterior container 7 made of a laminate film as a container. That is, the battery 100 includes a container member composed of the exterior container 7 made of laminate film.

The electrode group 1 is housed in the exterior container 7 made of laminate film; however, the ends of the negative electrode terminal 5 and the positive electrode terminal 6 extend out from the exterior container 7. An unillustrated electrolyte is housed in the exterior container 7 made of laminate film. The electrolyte is impregnated into the electrode group 1. The periphery of the exterior container 7 is heat-sealed, whereby the electrode group 1 and the electrolyte are sealed in.

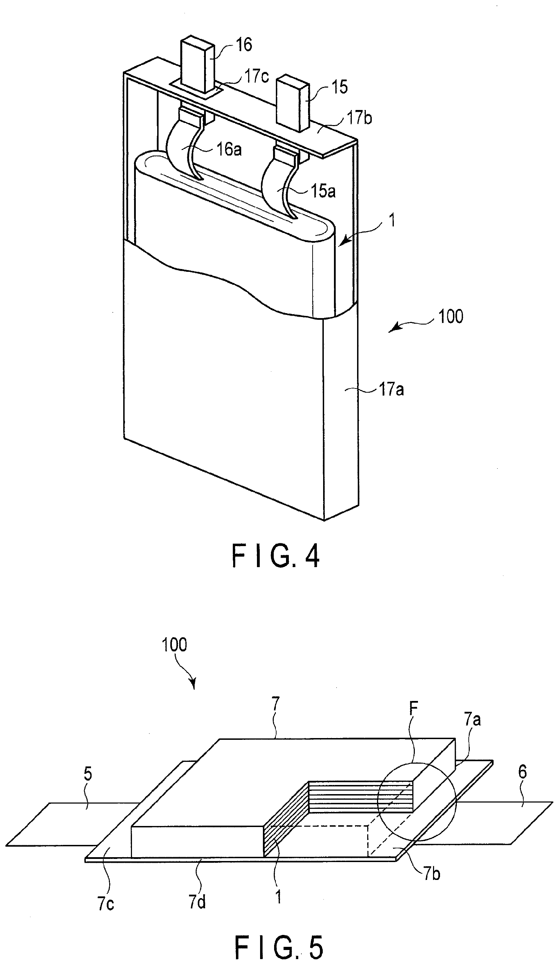

Next, another example of the battery according to the embodiment will be described in detail with reference to FIG. 4. FIG. 4 is a partially cutaway perspective view of a battery according to another example of the embodiment.

The battery 100 shown in FIG. 4 differs from the battery 100 shown in FIG. 2 and FIG. 3 in that the container member is composed of a metallic container 17a and a sealing plate 17b.

Like the electrode group 1 in the battery 100 shown in FIG 2 and FIG. 3, the flat electrode group 1 includes a negative electrode, a positive electrode, and a separator. Between FIG. 2 and FIG. 4, the electrode group 1 has similar structure. However in FIG. 4, a negative electrode lead 15a and a positive electrode lead 16a are respectively connected to the negative electrode and the positive electrode, instead of the negative electrode terminal 5 and the positive electrode terminal 6, as described later.

In the battery 100 shown in FIG. 4, such an electrode group 1 is housed in a metal container 17a. The metal container 17a further houses an unillustrated electrolyte. The metal container 17a is sealed by the sealing plate 17b made of a metal. The metal container 17a and the sealing plate 17b configure an outer can as the container member, for example.

One end of the negative electrode lead 15a is electrically connected to the negative electrode current collector and the other end is electrically connected to the negative electrode terminal 15. One end of the positive electrode lead 16a is electrically connected to the positive electrode current collector and the other end is electrically connected to the positive electrode terminal 16 fixed to the sealing plate 17b. The positive electrode terminal 16 is fixed to the sealing plate 17b via an insulating member 17c. The positive electrode terminal 16 and the sealing plate 17b are electrically insulated by the insulating member 17c.

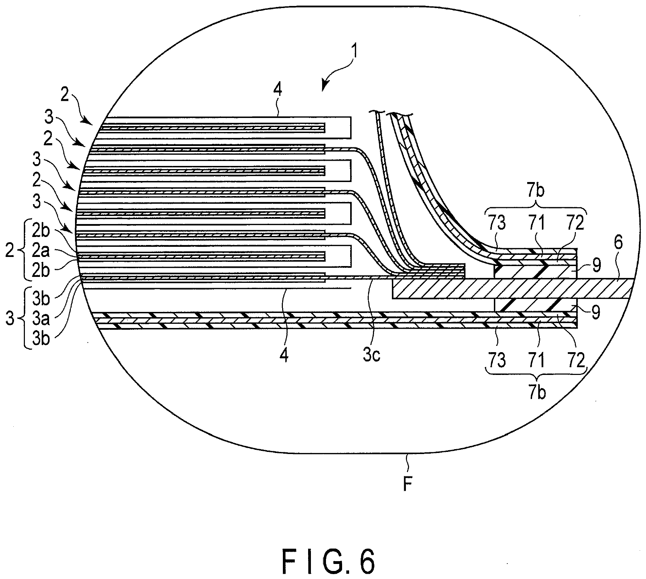

In FIG. 5 and FIG. 6, as a further other example of the battery, a battery including a stacked electrode group is shown. FIG. 5 is a partially cutout perspective view of the further other example of the battery according to the embodiment. FIG. 6 is an enlarged sectional view of section F of the battery shown in FIG. 5.

The battery 100 of the example shown in FIG. 5 and FIG. 6 includes an electrode group 1 shown in FIGS. 5 and 6, an exterior container 7 shown in FIGS. 5 and 6, a positive electrode terminal 6 shown in FIGS. 5 and 6, and a negative electrode terminal 5 shown in FIG. 5.

The electrode group 1 shown in FIGS. 5 and 6, includes plural positive electrodes 3, plural negative electrodes 2, and one separator 4.

Each positive electrode 3 includes a positive electrode current collector 3a and positive electrode active material-including layers 3b formed on both sides of the positive electrode current collector 3a, as shown in FIG. 6. The positive electrode current collector 3a includes a portion where the positive electrode active material-including layer 3b is not formed on either surface, as shown in FIG. 6. This portion functions as a positive electrode current collecting tab 3c. The positive electrode current collecting tab 3c may be a narrow portion of a width narrower than the positive electrode active material-containing layer 3b, as with the positive electrode current collecting tab 3c shown in FIG. 1.

Each negative electrode 2 includes a negative electrode current collector 2a and negative electrode active material-including layers 2b formed on both sides of the negative electrode current collector 2a. The negative electrode current collector 2a includes a portion where the negative electrode active material-including layer 2b is not formed on either surface (not shown) . This portion functions as a negative electrode current collecting tab.

As with a part thereof shown in FIG. 6, the separator 4 is folded in zigzag. In each of spaces defined by surfaces facing each other of the separator 4 folded in zigzag, either of the positive electrode 3 or the negative electrode 2 is disposed. Accordingly, the positive electrodes 3 and the negative electrodes 2 are stacked so that the positive electrode active material-including layer 3b and the negative electrode active material-including layer 2b face each other through the separator 4 sandwiched therebetween, as shown in FIG. 6. Thus, the electrode group 1 is formed.

The positive electrode current collecting tabs 3c of the electrode group 1 extend further out than each of the ends of the positive electrode active material-containing layers 3b and the negative electrode active material-containing layers 2b, as shown in FIG. 6. The positive electrode current collecting tabs 3c are, as shown in FIG. 6, collected into one and connected to the positive electrode terminal 6. Although not shown, the negative electrode current collecting tabs of the electrode group 1 also extend further out than each of the other ends of the positive electrode active material-containing layers 3b and the negative electrode active material-containing layers 2b. Though not shown, the negative electrode current collecting tabs are collected into one and connected to the negative electrode terminal 5 shown in FIG. 5.

Such an electrode group 1 is housed in a container member composed of an exterior container 7 made of laminate film, as shown in FIGS. 5 and 6.

The exterior container 7 is formed of an aluminum-containing laminate film made of an aluminum foil 71 and resin films 72 and 73 formed on the both sides thereof. The aluminum-containing laminate film forming the exterior container 7 is folded with a folding section 3d being a fold so that the resin film 72 faces inward, and houses the electrode group 1. As shown in FIGS. 5 and 6, at the periphery 7b of the exterior container 7, portions of the resin films 72 that face one another hold the positive electrode terminal 6 therebetween. Similarly, at the periphery 7c of the exterior container 7, portions of the resin films 72 that face one another hold the negative electrode terminal 5 therebetween. The positive electrode terminal 6 and the negative electrode terminal 5 extend out from the exterior container 7 in opposite directions from each other.

At the peripheries 7a, 7b and 7c of the exterior container 7 excluding the portions holding the positive electrode terminal 6 and the negative electrode terminal 5, portions of the resin film 72 facing each other are thermally fusion bonded.

In the battery 100, in order to improve bonding strength between the positive electrode terminal 6 and the resin film 72, insulating films 9 are provided between the positive electrode terminal 6 and the resin films 72, as shown in FIG. 6. In the periphery 7b, the positive electrode terminal 6 and the insulating film 9 are thermally fusion bonded, and the resin film 72 and the insulating film 9 are thermally fusion bonded. Similarly, although not shown, insulating films 9 are also provided between the negative electrode terminal 5 and the resin films 72. In the periphery 7c, the negative electrode terminal 5 and the insulating film 9 are thermally fusion bonded, and the resin film 72 and the insulating film 9 are thermally fusion bonded. Namely, in the battery 100 shown in FIG. 5, all of the peripheries 7a, 7b and 7c of the exterior container 7 are heat-sealed.

The exterior container 7 further houses an electrolyte, which is not shown. The electrolyte is impregnated into the electrode group 1.

In the battery 100 shown in FIGS. 5 and 6, the multiple positive electrode current collecting tabs 3c are collected at the undermost layer of the electrode group 1, as shown in FIG. 6. Similarly, although not shown, the multiple negative electrode current collecting tabs are collected at the undermost layer of the electrode group 1. The multiple positive electrode current collecting tabs 3c and the multiple negative electrode current collecting tabs may, however, instead be respectively collected into one near a middle of the electrode group 1, and connected to the positive electrode terminal 6 and the negative electrode terminal 5, respectively, for example.

The battery according to the third embodiment includes a positive electrode and a negative electrode. The positive electrode includes the electrode according to the first embodiment. Therefore, the battery exhibits superior output performance and long life.

[Fourth Embodiment]

According to a fourth embodiment, a battery pack is provided. The battery pack includes the battery according to the third embodiment.

The battery pack may include plural batteries . The plural batteries may be electrically connected in series or electrically connected in parallel. Alternatively, the plural batteries may be electrically connected in combination of in series and in parallel. The electrically connected batteries may configure a battery module. Namely, the battery pack according to the embodiment may include a battery module. Plural battery modules may be included. The plural battery modules may be electrically connected in series, in parallel, or in combination of in series and in parallel.

The battery pack may further include a protective circuit. The protective circuit has a function to control charging and discharging of the battery. Alternatively, a circuit included in equipment where the battery pack serves as a power source (for example, electronic devices, automobiles, and the like) may be used as the protective circuit for the battery pack.

Moreover, the battery pack may further include an external power distribution terminal. The external power distribution terminal is configured to externally output current from the battery, and to input current into the battery. In other words, when the battery pack is used as a power source, the current is provided out via the external power distribution terminal. When the battery pack is charged, the charging current (including regenerative energy of motive force of automobiles) is provided to the battery pack via the external power distribution terminal.

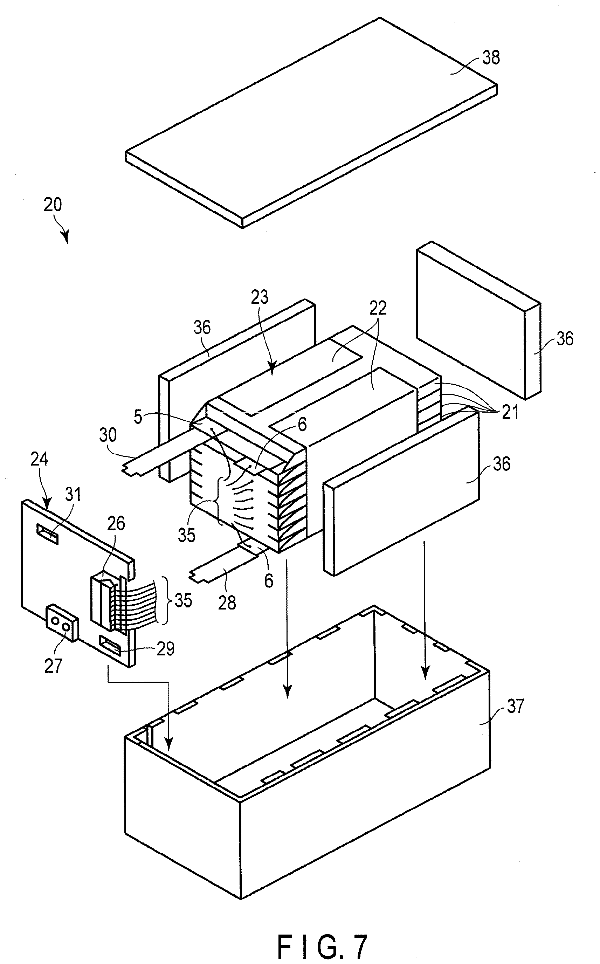

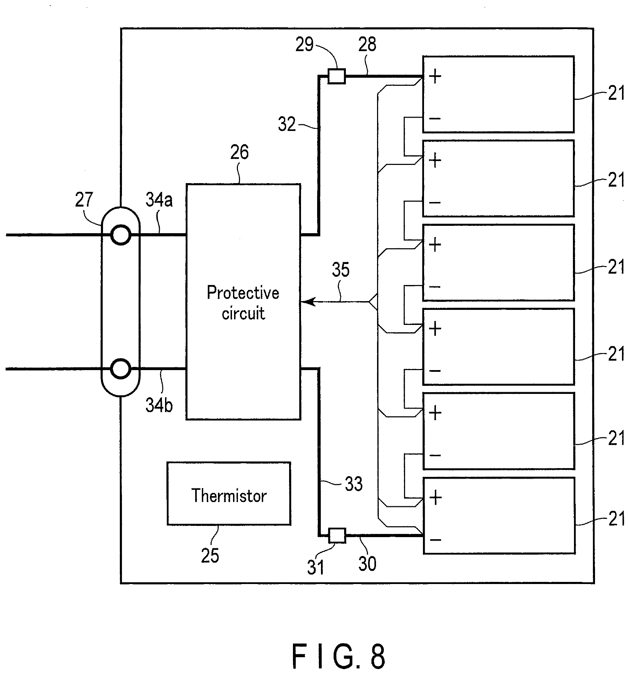

An example of the battery pack will be described below with reference to FIG. 7 and FIG. 8. FIG. 7 is an exploded perspective view showing an example of the battery pack according to the embodiment. FIG. 8 is a block diagram showing an example of an electric circuit of the battery pack shown in FIG. 7.

The battery pack 20 shown in FIG. 7 and FIG. 8 includes plural single-batteries 21. The single-battery 21 may, for example, be the exemplar flat battery 100 according to the embodiment described with reference to FIG. 2.

The plural single-batteries 21 are stacked so that negative electrode terminals 5 and positive electrode terminals 6 extending outside are aligned in the same direction and are fastened with an adhesive tape 22 to configure a battery module 23. These single-batteries 21 are electrically connected in series with each other as shown in FIG. 8.

A printed wiring board 24 is disposed facing the side surface from which the negative electrode terminals 5 and the positive electrode terminals 6 of the single-batteries 21 extend. As shown in FIG. 8, the printed wiring board 24 has a thermistor 25, a protective circuit 26, and an external power distribution terminal 27 mounted thereon. Note that an insulating plate (not shown) is attached to the surface of the printed wiring board 24, which faces the battery module 23, so as to avoid unnecessary connection with the wiring of the battery module 23.

A positive electrode side lead 28 is connected to the positive electrode terminal 6 located lowermost in the battery module 23, and its tip is inserted into a positive electrode side connector 29 of the printed wiring board 24 and electrically connected thereto. A negative electrode side lead 30 is connected to the negative electrode terminal 5 located uppermost in the battery module 23, and its tip is inserted into the negative electrode side connector 3.1 of the printed wiring board 24 and electrically connected thereto. These connectors 29 and 31 are connected to the protective circuit 26 through wiring 32 and the wiring 33 formed on the printed wiring board 24.

The thermistor 25 detects the temperature of the single-batteries 21, and the detection signal is transmitted to the protective circuit 26. The protective circuit 26 can shut off a plus-side wiring 34a and a minus-side wiring 34b between the protective circuit 26 and the external power distribution terminal 27 in accordance to a predetermined condition. An example of the predetermined condition is when the temperature detected by the thermistor 25 becomes a predetermined temperature or higher. Another example of the predetermined condition is when overcharge, over-discharge, overcurrent, or the like of the single-battery 21 is detected. Detection of the overcharge or the like is performed for each of the individual single-batteries 21 or the entire battery module 23. In the case of detecting each single-battery 21, a battery voltage may be detected, or a positive electrode potential or a negative electrode potential may be detected. In the latter case, a lithium electrode used as a reference electrode is inserted into each single-battery 21. For the battery pack 20 of FIG. 7 and FIG. 8, wiring 35 for voltage detection is connected to each of the single-batteries 21. Detection signals are transmitted to the protective circuit 26 through the wiring 35.

Protective sheets 36 made of rubber or resin are respectively arranged on three side surfaces of the battery module 23 excluding the side surface from which the positive electrode terminal 6 and the negative electrode terminal 5 protrude.

The battery module 23 is housed in a housing container 37 together with each protective sheet 36 and the printed wiring board 24. Namely, the protective sheets 36 are disposed in the housing container 37 respectively on both inner side surfaces along a long-side direction and an inner side surface along a short-side direction, and the printed wiring board 24 is disposed on the other inner side surface along the short-side direction on the opposite side across the battery module 23. The battery module 23 is located in a space surrounded by the protective sheets 36 and the printed wiring board 24. A lid 38 is attached to the upper surface of the housing container 37.

For fixing the battery module 23, a thermal shrinkage tape may be used in place of the adhesive tape 22. In this case, after the protective sheets are disposed on each side surface of the battery module and a thermal shrinkage tape is wound, the thermal shrinkage tape is thermally shrunk, to bind the battery module.

While FIG. 7 and FIG. 8 show a form where the single-batteries 21 are electrically connected in series, the single-batteries 21 may be electrically connected in parallel in order to increase the battery capacity. Further, assembled battery packs may also be electrically connected in series and/or parallel.

The mode of the battery pack is appropriately changed depending on the application. A preferable application of the battery pack according to the embodiment is one where cycle performance is desired for charge and discharge with a large current. Specific examples of the applications include that for a power source of a digital camera, and for use in a vehicle such as a two-wheeled to four-wheeled hybrid electric automobile, a two-wheeled to four-wheeled electric automobile, and a power-assisted bicycle. As the application of the battery pack according to the embodiment, onboard use is particularly favorable.

The battery according to the fourth embodiment includes the battery according to the third embodiment. Therefore, the battery pack according to the embodiment exhibits superior output performance and long life.

[Examples]

Hereinafter, the present invention will be described in more detail with reference to examples; however, as long as the scope of the invention is not exceeded, the present invention is not limited to the examples given below.

(Example 1)

(Production of Positive Electrode)

As active material particles, particles of a lithium nickel cobalt manganese composite oxide $LiNi_{0.8}Co_{0.1}Mn_{0.1}O_2$ (Ni:Co:Mn = 8:1:1) having an average particle size of 4.0 $\mu$m were prepared. Acetylene black was prepared as an electro-conductive agent and polyvinylidene fluoride was prepared as a binder. The active material particles, the electro-conductive agent, and the binder were prepared at a mass ratio of 93:5:2, respectively. The prepared active material particles and electro-conductive agent were mixed using a Henschel mixer to form a composite material (compound) of the active material and the electro-conductive agent. The obtained composite material and the binder were dispersed in N-methylpyrrolidone (NMP) and kneaded using a planetary mixer having a volumetric capacity of 20L. At this time, in order to avoid rapid increase in viscosity, each material was added little by little into NMP. The kneading was performed under a stiff kneading condition in which a solid content concentration (non-volatile content; NV) was 79%. Next, the kneaded product was transferred to a bead mill apparatus having a 310 mL volumetric capacity, and mixed at a bead rotation rate of 1100 rpm to prepare a slurry.

The prepared slurry was uniformly applied as a positive electrode coating liquid onto both front and back surfaces of a current collector made of a strip-shaped aluminum foil. The coating film of the positive electrode coating liquid was dried to form a positive electrode active material-containing layer. The dried strip was press-molded so that the density of the positive electrode active material-containing layer was 3.4 g/cm$^3$. The rolled electrode was then cut into a predetermined size. A current collecting tab was welded thereto, whereby a positive electrode was obtained.

(Production of Negative Electrode)

A spinel lithium titanium oxide represented by $Li_4Ti_5O_{12}$ as a negative electrode active material, graphite as an electro-conductive agent, and polyvinylidene fluoride as a binder were prepared. The negative electrode active material, the electro-conductive agent, and the binder were dissolved and mixed in NMP at a mass ratio of 94 :4 :2, to prepare a slurry. This slurry was uniformly applied as a negative electrode coating liquid onto both front and back surfaces of a negative electrode current collector made of a strip-shaped aluminum foil. The negative electrode coating liquid was dried to form a negative electrode active material-containing layer. The dried strip was press-molded so that the density of the negative electrode active material-containing layer was 2.2 g/cm$^3$. The strip was cut into a predetermined size. A current collecting tab was welded thereto, whereby a negative electrode was obtained.

(Production of Electrode Group)

A nonwoven fabric separator made of cellulose was prepared. The separator had a thickness of 10 um. Next, the prepared separator was folded in a zigzag, and the separator and the produced positive and negative electrodes were stacked in the order of the separator, the positive electrode, the separator, and the negative electrode to form a stack. Thus, a stacked electrode group was produced.

(Preparation of Nonaqueous Electrolyte)

Propylene carbonate (PC) and diethyl carbonate (DEC) were mixed at a volume ratio of 1:2 to prepare a mixed solvent. Lithium hexafluorophosphate ($LiPF_6$) was dissolved in the mixed solvent at a concentration of 1 mol/L, whereby a liquid nonaqueous electrolyte was obtained.

(Assembly of Battery)

Electrode terminals were respectively attached to the positive electrode and the negative electrode of the stacked electrode group obtained as described above. The electrode group was put into an exterior container made of a laminate film. The aforementioned nonaqueous electrolyte was put into the container, and the exterior container was sealed, whereby a nonaqueous electrolyte battery was obtained. The nonaqueous electrolyte battery was designed to have a capacity of 1.5 Ah.

(Examples 2 to 7 and Comparative Examples 1 to 4)

In each of Examples 2 to 7 and Comparative Examples 1 to 4 , a nonaqueous electrolyte battery was obtained by performing the same procedure as that of Example 1 except that the production conditions of the positive electrode were changed to the conditions shown in Table 1 below. Specifically, at least one of a change in the active material particles used in the positive electrode, a change in the solid content concentration (NV) during kneading using a planetary mixer, a change in the bead rotation rate during mixing using a bead mill, and a change in the density of the active material-containing layer by adjusting the pressing pressure during press molding was performed. In the case where the active material particles were changed, active material particles different in at least one of the active material composition and the average particle size were selected. In Table 1, the active material composition represents a stoichiometric ratio of Ni, Co, and Mn in the lithium nickel cobalt manganese composite oxide represented by $Li_aNi_{1-x-y-z}Co_xMn_yM_zO_2$, where the subscript a is 1 and the subscript z is 0. That is, the composition of the active material was $LiNi_{0.8}Co_{0.1}Mn_{0.1}O_2$ (Ni:Co:Mn = 8:1:1) in Examples 1-3, 6, and 7 and Comparative Examples 1, 3, and 4, $LiNi_{0.6}Co_{0.2}Mn_{0.2}O_2$ (Ni:Co:Mn = 6:2:2) in Example 4, and $LiNi_{0.5}Co_{0.2}Mn_{0.3}O_2$ (Ni:Co:Mn = 5:2:3) in Example 5 and Comparative Example 2.

[Table 1]

| [Table 1] | Active material particles of positive electrode | | Solid content concentration NV [%] | Bead rotation rate [rpm] | Density of active material-containing layer [g/cm$^3$] |
|---|---|---|---|---|---|
| | Active material composition Ni:Co:Mn | Average particle size [μm] | | | |
| Example 1 | 8:1:1 | 4.0 | 79 | 1100 | 3.4 |
| Example 2 | 8:1:1 | 4.0 | 79 | 800 | 3.8 |
| Example 3 | 8:1:1 | 2.2 | 79 | 1100 | 3.2 |
| Example 4 | 6:2:2 | 5.9 | 76 | 1350 | 3.5 |
| Example 5 | 5:2:3 | 4.5 | 77 | 1100 | 3.5 |
| Example 6 | 8:1:1 | 8.3 | 76 | 800 | 3.2 |
| Example 7 | 8:1:1 | 1.1 | 76 | 800 | 3.2 |
| Comparative Example 1 | 8:1:1 | 12.4 | 76 | 1900 | 3.4 |
| Comparative Example 2 | 5:2:3 | 6.2 | 76 | 800 | 3.1 |
| Comparative Example 3 | 8:1:1 | 5.8 | 79 | 1900 | 3.9 |
| Comparative Example 4 | 8:1:1 | 1.9 | 76 | 1900 | 3.1 |

For each of the nonaqueous electrolyte batteries obtained in Examples 1 to 7 and Comparative Examples 1 to 4, the breaking strength A of the composite material particles and the breaking strength B of the active material particles in the positive electrode were measured by the methods described above, and the strength ratio A/B was obtained. In addition, the laser diffraction scattering method described above was performed to evaluate the spread ($D_{90}/D_{10}$) of the particle size distribution in the active material-containing layer. The results are shown in Table 2 below.

[Table 2]

| [Table 2] | Breaking strength A of composite material particles [MPa] | Breaking strength B of active material particles [MPa] | A/B [-] | $D_{90}/D_{10}$ [-] |
|---|---|---|---|---|
| Example 1 | 6.5 | 173.5 | 0.037 | 2.8 |
| Example 2 | 8.1 | 173.5 | 0.047 | 2.8 |
| Example 3 | 2.8 | 268.6 | 0.010 | 2.6 |
| Example 4 | 3.9 | 41.1 | 0.095 | 3.9 |
| Example 5 | 5.6 | 104.4 | 0.054 | 2.8 |
| Example 6 | 15.2 | 210.0 | 0.072 | 4.2 |
| Example 7 | 9.6 | 337.7 | 0.028 | 4.6 |
| Comparative Example 1 | 50.0 | 50.6 | 0.988 | 4.6 |
| Comparative Example 2 | 2.4 | 51.8 | 0.046 | 4.2 |
| Comparative Example 3 | 10.6 | 99.2 | 0.107 | 2.7 |
| Comparative Example 4 | 2.3 | 293.9 | 0.008 | 2.8 |

According to Table 2, there can be seen a tendency where the higher the bead rotation speed, the lower the breaking strength A of the composite material particles, which shows that even in the case where the electrode density was increased, the increase in the breaking strength of the electrode composite material was suppressed by improving the dispersibility of the constituent materials. In addition, there can also be seen a tendency where the larger the average particle size of the active material particles, the higher the breaking strength A of the composite material particles. The breaking strength B of the positive electrode active material particles appears to vary depending on the composition of the active material and also to vary depending on the particle size, as well. It is presumed that the influence of the difference in the synthesis conditions of the active material appears as the difference in the particle size.

<Evaluation>

For each of the nonaqueous electrolyte batteries obtained in Examples 1 to 7 and Comparative Examples 1 to 4, the output performance and the life performance were evaluated. Specifically, for each battery, the capacity retention ratio at a high output (high rate) and the capacity retention ratio upon repeating charge and discharge cycles were measured as follows.

(Measurement of High Output Capacity Retention Ratio)

Each of the batteries was discharged at a 5C rate and at a 0.2C rate from a 100% state of charge (SOC) to an SOC of 0% in an environment at 25°C. The discharge capacity in the 5C rate discharge relative to the discharge capacity in the 0.2C rate discharge was calculated, and the 5C/0.2C discharge capacity retention ratio was obtained as a high output capacity retention ratio, which is an index of the output performance (5C/0.2C discharge capacity retention ratio = [5C discharge capacity/0.2C discharge capacity] $\times$ 100%). The results are shown in Table 3 below.

(Measurement of Charge-Discharge Cycle Capacity Retention Ratio)

The battery was subjected to a charge-discharge cycle test under the following conditions to measure a charge-discharge cycle capacity retention ratio. In the cycle test, the battery was subjected to 500 charge-discharge cycles in an SOC range of 0% to 100% in an environment of 45°C. At this time, both charging and discharging were performed at a current value of 2C. The discharge capacity at the first cycle and the discharge capacity at the 500th cycle were measured. A value thus obtained by dividing the capacity at the 500th cycle by the capacity at the first cycle was defined as a charge-discharge cycle capacity retention ratio (charge-discharge cycle capacity retention ratio = [discharge capacity at the first cycle/discharge capacity at the 500th cycle] $\times$ 100%). The results are shown in Table 3 below.

[Table 3]

| [Table 3] | High output capacity retention ratio [%] | Charge-discharge cycle capacity retention ratio [%] |
|---|---|---|
| Example 1 | 91 | 98.4 |
| Example 2 | 89 | 97.1 |
| Example 3 | 90 | 96.7 |
| Example 4 | 91 | 96.7 |
| Example 5 | 89 | 96.6 |
| Example 6 | 88 | 96.5 |
| Example 7 | 91 | 96.5 |
| Comparative Example 1 | 84 | 93.8 |
| Comparative Example 2 | 87 | 96.4 |
| Comparative Example 3 | 83 | 93.7 |
| Comparative Example 4 | 91 | 92.5 |

As shown in Table 3, the nonaqueous electrolyte batteries obtained in Examples 1 to 7 exhibited excellent output performance and high life performance. In particular, the nonaqueous electrolyte batteries obtained in Examples 1 to 3 tended to be superior in charge-discharge cycle capacity retention ratio. This is presumed to be due to the high solid content concentration at the time of slurry preparation of the positive electrode coating liquid of Examples 1-3. Specifically, it is presumed that since the dispersibility of the constituent materials (particularly, the electro-conductive agent) of the electrode composite material was satisfactory, the electrode reaction in the positive electrode proceeded uniformly, and thus excellent life performance was exhibited. In contrast, in the nonaqueous electrolyte battery according to Comparative Example 1, both the output performance and the lifetime were low. In Comparative Example 1, since the strength ratio A/B of the breaking strength A of the composite material particles to the breaking strength B of the active material particles was significantly high, it is presumed that the composite material (the active material particles, the electro-conductive agent, and the binder) of the positive electrode was densely agglomerated, and the permeability of the liquid nonaqueous electrolyte was low, resulting in low output performance. In addition, it is presumed that since the strength ratio A/B was high in Comparative Example 1, the volume change of the positive electrode due to charge and discharge could not be moderated, resulting in a short lifetime. In Comparative Example 2, it is presumed that the electric resistance in the positive electrode was high due to the low density of the positive electrode active material-containing layer, whereby the output performance was low. On the other hand, in Comparative Example 3, the strength ratio A/B and the density of the positive electrode active material-containing layer were high; therefore, the permeability of the liquid nonaqueous electrolyte was poor, which made the output performance low, and which also made the electrode reaction in the positive electrode non-uniform, resulting in a low life performance. In Comparative Example 4, since the strength ratio A/B was low, it is presumed that the strength of the positive electrode active material-containing layer was low, resulting in a low life performance.

According to one or more of the embodiments and examples described above, an electrode is provided. The electrode includes an active material-containing layer containing composite material particles, which includes active material particles, an electro-conductive agent, and a binder. The active material particles contain a lithium nickel cobalt manganese composite oxide. The strength ratio A/B of the breaking strength A of the composite material particles to the breaking strength B of the active material particles is within the range of 0.01 to 0.1. The density of the active material-containing layer is within the range of 3.2 g/cm$^3$ to 3.8 g/cm$^3$. According to the configuration described above, there can be provided an electrode capable of realizing a long-life battery having excellent output performance, and a long-life battery and battery pack having excellent output performance.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

**Claims**

1.  An electrode comprising:

    an active material-containing layer containing composite material particles, the composite material particles including active material particles, an electro-conductive agent, and a binder, the active material particles containing a lithium nickel cobalt manganese composite oxide,
    a strength ratio A/B of a breaking strength A of the composite material particles to a breaking strength B of the active material particles being within a range of 0.01 to 0.1, and a density of the active material-containing layer being within a range of 3.2 g/cm$^3$ to 3.8 g/cm$^3$.

2.  The electrode according to claim 1, wherein the breaking strength A of the composite material particles is within a range of 2 MPa to 10 MPa, and the breaking strength B of the active material particles is within a range of 30 MPa to 300 MPa.

3.  The electrode according to claim 1 or 2, wherein an average particle size of the active material particles is within a range of 2 $\mu$m to 6 $\mu$m.

4.  The electrode according to any one of claims 1 to 3, wherein the active material-containing layer has a particle size distribution for which a ratio $D_{90}/D_{10}$ of a particle size $D_{90}$ at a cumulative frequency of 90% from a small particle size side to a particle size $D_{10}$ at a cumulative frequency of 10% from the small particle size side is 4 or less.

5.  The electrode according to any one of claims 1 to 4, wherein the lithium nickel cobalt manganese composite oxide is represented by a general formula $Li_aNi_{1-x-y-z}CO_xMn_yM_zO_2$, where $0.9 < a \le 1.25$, $0 < x < 1$, $0 < y < 1$, $0 < z < 0.2$, $x + y + z < 1$, and M includes one or more metal elements other than Ni, Co, and Mn.

6.  The electrode according to claim 5, wherein the metal elements include at least one selected from the group consisting of Mg, Ca, Al, Ti, V, Cr, Zr, Nb, Mo, and W.

7.  The electrode according to any one of claims 1 to 6, wherein a proportional content of the electro-conductive agent to a total mass of the active material particles, the electro-conductive agent, and the binder is within a range of 3% by mass to 20% by mass.

8.  A battery comprising:

    a positive electrode; and
    a negative electrode,

    the positive electrode including the electrode according to any one of claims 1 to 7.

9.  A battery pack comprising the battery according to claim 8.

FIG. 1

FIG. 2

FIG. 3

F I G. 4

F I G. 5

FIG. 6

F I G. 7

F I G. 8

## INTERNATIONAL SEARCH REPORT

| International application No. |
| --- |
| **PCT/JP2021/031554** |

| | |
| --- | --- |
| **A. CLASSIFICATION OF SUBJECT MATTER** | |

*H01M 4/505*(2010.01)i; *H01M 4/525*(2010.01)i
FI:  H01M4/505; H01M4/525

According to International Patent Classification (IPC) or to both national classification and IPC

**B. FIELDS SEARCHED**

Minimum documentation searched (classification system followed by classification symbols)

H01M4/505; H01M4/525

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | WO 2016/031677 A1 (CS ENERGY MATERIALS LTD.) 03 March 2016 (2016-03-03) claims, paragraph [0056] | 1-9 |
| A | JP 2013-65468 A (PANASONIC CORP.) 11 April 2013 (2013-04-11) claims, paragraphs [0030]-[0033] | 1-9 |
| A | JP 2009-295307 A (FDK ENERGY CO., LTD.) 17 December 2009 (2009-12-17) claims, paragraphs [0049]-[0051] | 1-9 |
| A | JP 2018-137107 A (TOSHIBA CORP.) 30 August 2018 (2018-08-30) paragraphs [0068]-[0074] | 1-9 |

☐ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **05 November 2021** | **16 November 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/031554**

| Patent document cited in search report | | | Publication date (day/month/year) | Patent family member(s) | | | Publication date (day/month/year) |
|---|---|---|---|---|---|---|---|
| WO | 2016/031677 | A1 | 03 March 2016 | US | 2017/0256794 | A1 | |
| | | | | claims, paragraph [0056] | | | |
| | | | | CN | 106575763 | A | |
| JP | 2013-65468 | A | 11 April 2013 | (Family: none) | | | |
| JP | 2009-295307 | A | 17 December 2009 | (Family: none) | | | |
| JP | 2018-137107 | A | 30 August 2018 | US | 2018/0241090 | A1 | |
| | | | | paragraphs [0076]-[0083] | | | |
| | | | | EP | 3364491 | A1 | |
| | | | | CN | 108461742 | A | |

Form PCT/ISA/210 (patent family annex) (January 2015)

**EP 4 394 941 A1**

**Patent documents cited in the description**

- JP 2004355824 A
- JP 2016157677 A